# EUROPEAN PATENT APPLICATION

(11) **EP 1 284 417 A2**
(43) Date of publication of application: **19.02.2003**
(21) Application number: 02018177.2
(22) Date of filing: 19.08.2002
(51) Int. Cl.: G01N 21/35

(54) **Multi-component analyzing apparatus**

(30) Priority: 17.08.2001 JP 2001247636
(71) Applicant: HORIBA, LTD., Kyoto-shi, Kyoto (JP)
(72) Inventor: Nomura, Toshiyuki, Minami-ku, Kyoto-shi, Kyoto (JP); Kohsaka, Hiroji, Minami-ku, Kyoto-shi, Kyoto (JP); Asano, Ichiro, Minami-ku, Kyoto-shi, Kyoto (JP)
(74) Representative: Grünecker, Kinkeldey, Stockmair & Schwanhäusser Anwaltssozietät

(57) **Abstract**

A multi-component analyzing apparatus for measuring a concentration ratio of gas components of fron gas is provided, while the fron gas is constituted by several sorts of single gas components of fron gas, and the fron gas is employed as a measuring subject sample made by mixing a plurality of measuring subject components with each other, whose sort and quantity are limited. A multi-component analyzing apparatus is comprised of: a measuring cell for conducting thereinto a measuring subject sample which is made by mixing a plurality of measuring subject components with each other, whose sorts and quantity are limited; an infrared light source for irradiating infrared rays to the measuring cell; a plurality of bandpass filters for transmitting therethrough infrared rays having wavelengths which are fitted to infrared absorption spectra of the respective measuring subject components among infrared rays which have transmitted the measuring cell; a plurality of detectors for measuring intensity of infrared rays which have transmitted the bandpass filters; a calculating process unit formeasuring concentrations of the respective measuring subject components in such a manner that the calculating process unit executes a multivariate analysis by employing the intensity of the infrared rays measured by the respective detectors; and a display unit for displaying thereon a measurement result.

## Description

### BACKGROUND OF THE INVENTION

The present invention is related to a multi-component analyzing apparatus.

Conventionally, so-called "fron gas" containing chlorine such as CFC (Chlorofluorocarbon) or HCFC (Hydrochlorofluorocarbon) is generally employed as refrigerants, especially, such refrigerants used in refrigerators and cooling machines such as air conditioners. As to this fron gas, there are the HFC-series fron gas as the new type refregirants in addition to the CFC-series fron gas and the HCFC-series fron gas as the old type refrigerants. The fron gas owns various problems as to depletions of ozone layers and global warming. Under such a circumstance, the fron gas must be recovered as well as must be recycled. Also, such fron gas which cannot be recycled should be firmly destructed.

On the other hand, the fron 410A, the fron 407C, the fron 404A, and the fron 507A, which are typically known as the new type refrigerant, correspond to such a type of fron gas manufactured by mixing several sorts of single component fron gas with each other in a preselected ratio, selected from plural sorts of single component fron gas (namely, fron 32, fron 125, fron 134a, and fron 143a). Further, the fron 502 and the like are provided as the new type refrigerant. However, there are some cases that mixture ratios of recovered fron gas are not proper due to erroneous recovery of such fron gas. If this erroneously recovered fron gas is directly recycled, then there is such a risk that performance of cooling machines would be deteriorated and/or these cooling machines would be destroyed.

As a consequence, after fron gas has been recovered, fron gas recovering industries are required to confirm as to whether or not the recovered fron gas can be recycled, and then, should determine as to whether the recovered fron gas is recycled, or destroyed. In other words, concentration measurement operations of the fron gas before or after being recovered should be carried out in order avoid such a chance that the fron gas is erroneously recovered and/or is erroneously used when the fron gas is recovered, and also, is recycled.

On the other hand, various measuring methods have been proposed as a method for measuring a mixture component ratio of fron gas. For instance, in the concentration measuring method and the concentration measuring apparatus for multi-component mixture refrigerants as disclosed in JP-A-8-136095, while sound speeds and pressures of a mixture refrigirant are measured in a plurality of temperature ranges, these measured sound speeds and pressures are calculated, so that concentrations of the mixture refrigerant are measured.

Such a conventional measuring method may be properly used in the concentration measurement operation executed within the cooling apparatus, while both the sound speeds and the pressures of the mixture refrigerant are measured in the plural temperature ranges, and then, the measured sound speeds and pressures are calculated so as to measure the concentration of the mixture refrigerant. However, this conventional concentration measuring method can be hardly applied to such a case that concentrations of recovered fron gas are measured. Under such a circumstance, one solution may be conceived. That is, the concentration of the recovered fron gas may be measured by employ mass spectrometry, or the like. In this solution case, gas should be diluted, and also, a measuring unit must be brought into a vacuum state. Since preparations for measuring concentrations are necessarily required, there are problems in operability.

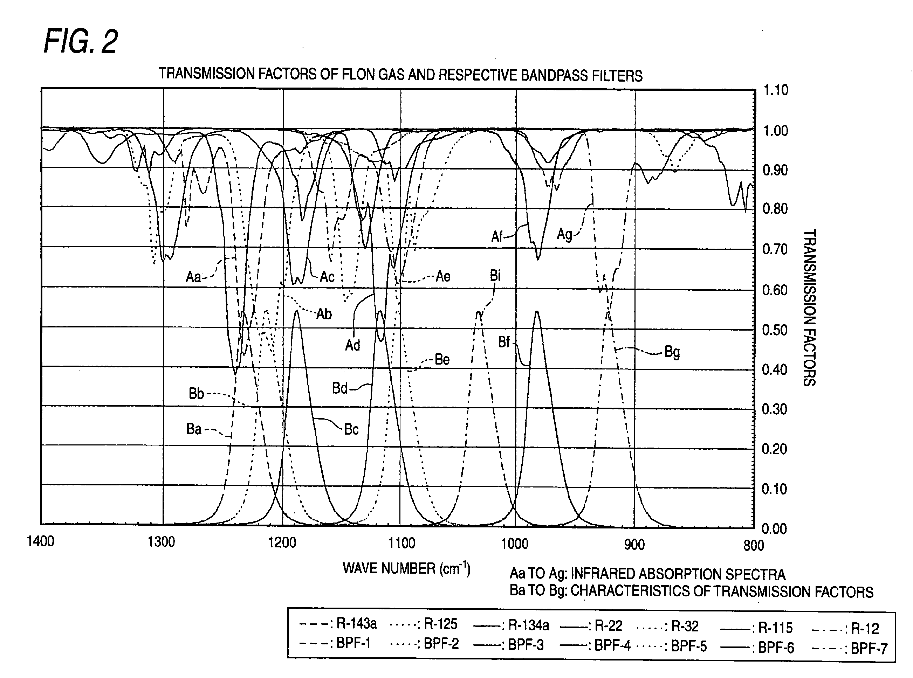

Further, while the conventionally-used infrared gas analyzer is employed, concentration measurement operations of fron gas may be conceived. However, this idea may have such a problem, since there are many sorts of fron gas and also infrared absorption spectra as to a plurality of fron gas are partially overlapped with each other, as indicated in Fig. 2. That is to say, fron gas which may be measured by employing such an infrared gas analyzer is limited to both the fron 12 and the fron 134a, namely, only specific sorts of fron gas combined with each other, the infrared absorption spectra of which are not overlapped with each other.

Moreover, in the case that such infrared gas analyzers are combined with each other so as to execute a plurality of gas component measurements, the following problems occur. That is, adverse influences caused by interference are mutually received, so that resultant measuring errors are increased. Also, bulky measuring apparatus are necessarily required.

### SUMMARY OF THE INVENTION

The present invention has an object to provide a multi-component analyzing apparatus capable of measuring a concentration ratio of single components of fron gas which is constituted by mixing several sorts of single components of fron gas with each other as a measuring subject sample which is made by mixing a plurality of measuring subject components whose sorts and quantities are limited.

To achieve the above-described object, a multi-component analyzing apparatus, according to the present invention, comprises: a measuring cell for conducting thereinto a measuring subject sample which is made by mixing a plurality of measuring subject components with each other, whose sorts and number thereof are limited; an infrared light source for irradiating infrared rays to the measuring cell; a plurality of bandpass filters for transmitting therethrough infrared rays having wavelengths which are fitted to infrared absorption spectra of the respective measuring subject components among infrared rays which have transmitted the measuring cell; a plurality of detectors for measuring intensity of infrared rays which have transmitted the bandpass filters; a calculating process unit for measuring concentrations of the respective measuring subject components in such a manner that the calculating process unit executes a multivariate analysis by employing the intensity of the infrared rays measured by the respective detectors; and a display unit for displaying thereon a measurement result.

The above-described multi-component analyzing apparatus measures the concentrations of the respective measurement subject components in such a manner that intensity of such infrared rays is measured by a plurality of detectors, while the infrared rays transmit the bandpass filters, and are selected from the infrared rays which have passed through the measuring subject sample stored in the measuring cell. The infrared transmission factors of these bandpass filters are fitted to the infrared absorption spectra of the respective measuring subject components. As a result, according to the multi-component analyzing apparatus, the measuring subject sample is no longer diluted and also the measuring unit need not be brought into the vacuum state, contrary to the above-explained mass spectrometry. The structure of this multi-component analyzing apparatus can be made simple as well as compact and also can be manufactured in low cost. Also, the optical system of this multi-component analyzing apparatus can be made simple, while the continuos concentration measurement operation can be carried out without employing a spectroscope and an interferometer. Then, since the measurement result is displayed on the display unit, this multi-component analyzing apparatus can be easily handled, and, in particular, can be usefully operated in such a case that a concentration ratio of preselected measuring subject components such as fron gas is investigated in a simple manner.

In addition, in the case that there is an adverse influence caused by interference, for instance, overlapped portions of infrared absorption spectra of the above-explained measuring subject components, since the calculating process unit executes the multivariate analysis, this adverse influence by the interference can be canceled. In other words, the half-value widths of the bandpass filters are not unnecessarily narrowed in order to avoid such a condition that the infrared absorption spectra of the respective measuring subject components are partially overlapped with each other. It is possible to provide such a low-cost multi-component analyzing apparatus. Also, sorts of measuring subject components (namely, gas sorts of fron gas) need not be limited unless the infrared absorption spectra of these measuring subject components are overlapped with each other over an entire region of measuring wave numbers thereof. In fact, the multi-component analyzing apparatus of the present invention can measure concentration ratios of the respective measuring subject components as to any types of measuring subject samples which are constituted by mixing a plurality of measuring subject components with each other, while both the gas sorts and the numbers of these measuring subject components to be handled are limited.

The above-described calculating process unit owns both a high precision measurement function and a mixture component confirmation function. In the high precision measurement function, a measuring subject component contained in a measuring subject sample among the respective measuring subject components is selected, and a concentration of the selected measuring subject component is measured in high precision. In the mixture component confirmation function, assuming now that all of the measuring subject components are mixed into the measuring subject sample, concentrations of the respective measuring subject components are measured. In this case, when no one knows that which measuring subject components are contained in the plural components which are determined as the measuring subject component within the measuring subject sample, the multi-component analyzing apparatus can perform such a concentration analysis capable of confirming as to whether or not which measuring subject component is contained by employing the mixture component confirmation function. Further, when an operator knows in advance such a component which is not contained in the measuring subject sample, the calculation precision by the calculating process unit can be increased by eliminating this known component.

### BRIEF DESCRIPTION OF THE DRAWINGS

Fig. 1 is a diagram for schematically indicating an entire arrangement of a multi-component analyzing apparatus according to the present invention;
Fig. 2 is a graph for graphically showing infrared absorption spectra of all sorts of single component fron gas to be handled and characteristics of infrared transmission factors of bandpass filters corresponding thereto;
Fig. 3 is a graph for graphically representing infrared absorption spectra of fron gas employed as the new type refrigerant, and characteristics of infrared transmission factors of bandpass filters corresponding thereto;
Fig. 4 is a graph for graphically representing infrared absorption spectra of another fron gas, and characteristics of infrared transmission factors of bandpass filters corresponding thereto; and
Fig. 5 is a graph for graphically representing infrared absorption spectra of fron gas employed as an on-vehicle air conditioner and characteristics of infrared transmission factors of bandpass filters corresponding thereto.

### DETAILED DESCRIPTION OF THE PREFERRED EMBODIMENTS

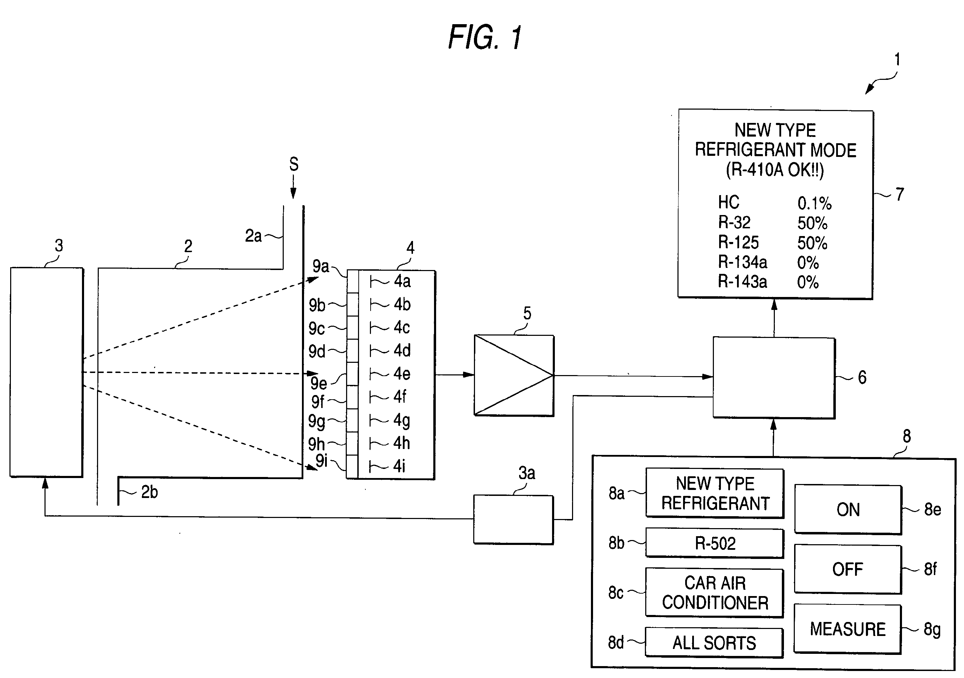

Fig. 1 is a diagram for schematically indicating an overall arrangement of a fron gas concentration measuring apparatus 1 corresponding to an example of a multi-component analyzing apparatus according to the present invention. In the fron gas concentration measuring apparatus 1, reference numeral 2 indicates a measuring cell used to conduct recovered fron gas "S" functioning as one example of a measuring subject sample, reference numeral 3 represents an infrared light source for irradiating infrared rays (light) to this measuring cell 2, reference numeral 4 shows a detector for detecting infrared transmission rays which transmit the measuring cell 2, and reference numeral 5 shows an amplifier for amplifying a detection output from the detector 4. Also, reference numeral 6 shows a calculating process unit for calculating intensity of transmission rays amplifiedby the amplifier 5, reference numeral 7 shows a display unit for displaying thereon a measurement result, and also reference numeral 8 represents a keyboard operated by an operator to enter an instruction input.

The measuring cell 2 of this example owns an inlet port 2a of, for example, the fron gas "S", and also an outlet port 2b thereof. However, in this example, while the fron gas "S" which has been recovered by a bottle (not shown) is acquired so as to be conducted from the inlet port 2a of the measuring cell 2 into the inside of this measuring cell 2, concentration measuring operations of this fron gas "S" is carried out under such a condition that the inside of the measuring cell 2 is filled with the fron gas "S."

It should be noted that while such a measuring subject sample "S" whose concentration components are varied time to time is supplied into the inside of the measuring cell 2, the multi-component analyzing apparatus 1 of the present invention may alternatively measure the concentration components of this measuring subject sample "S" in real time. In this alternative case, the multi-component analyzing apparatus 1 may be provided as a monitor installed in a fluid path.

Also, since the multi-component analyzing apparatus 1 of the present invention is combined with a flowmeter, this multi-component analyzing apparatus 1 may measure a total amount of recovered fron gas in such a manner that a change in concentrations of the fron gas which has been recovered as the measuring subject sample "S" is recorded and then this concentration change is integrated with a flow rate thereof. Alternatively, in the case that boiling points of the respective single component fron gas which constitutes recovered fron gas are different from each other, even when the fron gas is derived under vaporization condition of this fron gas, a correct concentration ratio of the fron gas stored in a bottle may be previously obtained by way of a calculation manner.

Furthermore, since the measuring subject sample of this embodiment is exemplified as the fron gas "S", the multi-component analyzing apparatus is mainly directed to the fron gas concentrationmeasuring apparatus 1, while the measuring subject sample is explained as the fron gas "S" in the below-mentioned description. It should be apparently noted that in accordance with the present invention, the measuring subject sample is not limited only to such fron gas "S."

The above-described infrared light source 3 corresponds to, for example, a thin-film light source, and reference numeral 3a is a light source control unit of this thin-film light source 3. Then, since the light source control unit 3a supplies electric power to the thin-film light source 3 in an interrupt manner, and thus the thin-film light source 3 irradiates infrared rays in an interrupt manner by receiving the supply of the electric power from the light source control unit 3a, such a detector may be employed, for instance, a pyroelectric type detector capable of generating a signal in proportion to a change in incident infrared rays thereof maybe used. Also, the thin-film light source 3 is not only a compact light source having low power consumption, as compared with a general-purpose infrared light source, but also is capable of emitting infrared rays in an interrupt manner by being combined with the above-described light source control unit 3a. As a result, a chopper containing a mechanical drive unit is no longer provided with this thin-film light source 3.

In other words, the multi-component analyzing apparatus 1 may be made compact and the manufacturing cost thereof may be reduced, and furthermore, the multi-component analyzing apparatus 1 may be easily handled without requiring warm-up operation thereof. Therefore, this multi-component analyzing apparatus 1 may measure contain amounts of fron gas "S" in a sense of a tester. Also, since such a member for performing a mechanical operation is omitted, a high operation stability may be achieved, and further, an occurrence of malfunction of the multi-component analyzing apparatus may be suppressed.

The detector 4 is equipped with, for example, nine sorts of bandpass filters 9a to 9i, and pyroelectric type detectors 4a to 4i which correspond to the respective bandpass filters 9a to 9i. In this example, since the pyroelectric type detectors 4a to 4i are employed as the detector 4, a light receiving area of this detector 4 can be made very small, namely, approximately 0.1 to 1 mm², and furthermore, a large number of pyroelectric type detectors 4a to 4i and a large number of bandpass filters 9a to 9i may be arranged side by side. The 7 sets of these bandpass filters 9a to 9g among nine sets of the bandpass filters 9a to 9i may limit wavelengths of infrared rays transmitted to these bandpass filters 9a to 9g into a predetermined wavelength range in fit to infrared absorption spectra of seven sorts of single fron gas components contained in the fron gas "S."

As apparent from the foregoing description, the present invention is not limited to such a condition that fron gas of respect single components which are contained in the recovered fron gas "S" is equal to seven sorts thereof. Even when there are any numbers of the respective gas components of fron gas contained in the recovered fron gas "S", a total number of such bandpass filters and also a total number of such pyroelectric type detectors may be set to a total component number of fron gas to be handled. Therefore, at least plural sets of these bandpass filters and pyroelectric type detectors are required, the total numbers of which are equal to the total component number of fron gas.

Also, in this example, the total numbers of the above-described bandpass filters and pyroelectric type filters employed in the fron gas concentration measuring apparatus 1 are larger than a total component number of fron gas by two, because there are provided bandpass filters and pyroelectric type detectors for zero-adjustment and for HC-measurment. These bandpass filters and pyroelectric type detectors are employed as reference bandpass filter and pyroelectric type detector used to zero-adjust infrared absorption amounts of the respective fron gas components, while using such a wavelength range where the respective fron gas components do not absorb infrared rays, and as HC-measuring bandpass filter and pyroelectric type detector which are provided so as to measure a concentration of lubricating oil and the like mixed with a refrigerant and to judge as to whether or not fron gas can be recycled. In other words, the fron gas concentration measuring apparatus 1 of the present invention employs as a detector, plural sets of bandpass filters and of pyroelectric type detectors, the total number of which is larger than, or equal to at least a total number of gas sorts (measuring subject) and reference gas.

Fig. 2 is a graph for graphically representing measurement results of infrared absorption spectra "Aa" to "Ag" of the respective single components of the fron gas (fron 12, fron 125, fron 143a, fron 22, fron 32, fron 115, and fron 134a) which corresponds to the respective measuring subject components, and transmission factors "Ba" to "Bg" of the respective bandpass filters 9a to 9g. In Fig. 2, an abscissa indicates a wave number, whereas an ordinate shows an absorption characteristic caused by the infrared absorption spectra "Aa" to "Ag", and transmission factors caused by the bandpass filters 9a to 9g.

As indicated in Fig. 2, in this embodiment, the characteristics of the bandpass filters 9a to 9g are designed in such a manner that central wave numbers of the respective bandpass filters become substantially equal to 1230 cm⁻¹, 1215 cm⁻¹, 1190 cm⁻¹, 1120 cm⁻¹, 1105 cm⁻¹, 980 cm⁻¹, 925 cm⁻¹. As a result, such infrared rays having wavelengths which are fitted to the infrared absorption spectra "Aa" to "Ag" of the respective single components of the fron gas can be transmitted by these bandpass filters 9a to 9g. The transmission factor characteristics of the respective bandpass filters 9a to 9g are required to be slightly shifted. Preferably, the characteristics of the transmission factors of the respective bandpass filters 9a to 9g may be set in such a manner that these transmission factor characteristics are not largely overlapped with each other, but are distributed.

In other words, outputs of the respective pyroelectric type detectors 4a to 4g which are obtained by measuring intensity of infrared rays transmitted through the respective bandpass filters 9a to 9g are mainly used in such a calculation for measuring the concentrations of the seven measuring subject components contained in the fron gas "S", which are recovered, respectively.

With respect to the characteristics about the above-described transmission factors of the band-pass filters 9a to 9g, the characteristics of the transmission factors and the filter structures are specifically not restricted if such a condition is satisfied that wave numbers of infrared rays transmitted through these bandpass filters 9a to 9g are located within such ranges of: 1200 to 1260 cm⁻¹, 1180 to 1240 cm⁻¹, 1160 to 1220 cm⁻¹, 1090 to 1150 cm⁻¹, 1070 to 1120 cm⁻¹, 960 to 1020 cm⁻¹, and 900 to 940 cm⁻¹. For example, a lowpass filter may be combined with a highpass filter so as to construct such a bandpass filter.

It should also be noted that the above-described characteristics of the bandpass filters 9a to 9g may provide better results in order that when the cell length of the measuring cell 2 is determined, the infrared absorption amounts of the fron gas are not largely different from each other. In other words, the characteristics of these bandpass filters designed in the above-described manner can avoid an occurrence of the following problem. That is, since the infrared absorption amounts by the respective fron gas are made substantially equal to each other, when the cell length of the measuring cell 2 is determined based upon such fron gas having a small infrared absorption amount, a curve of a detection line is increased with respect to such fron gas having a large infrared absorption amount, so that measuring precision in a high concentration range is deteriorated.

However, as to the above-described characteristics of the bandpass filters 9a to 9g, such a wave number may be selected which is fitted to other peaks of infrared absorptions, which appear in these infrared absorption spectra "Aa" to "Ag." In other words, for example, in the case of the fron 134a, the gas concentration measurement may be carried out by fitting other peaks of the infrared absorptions to both the wave number of approximately 1295 cm⁻¹ and the wave number of approximately 1180 cm⁻¹. Also, in the case of the fron 115, the gas concentration measurement may be carried out by fitting other peaks of the infrared absorptions to both the wave number of approximately 1240 cm⁻¹ and the wave number of approximately 1180 cm⁻¹. Also, in the case of the fron 125, the gas concentration measurement may be carried out by fitting other peaks of the infrared absorptions to both the wave number of approximately 1145 cm⁻¹ and the wave number of approximately 870 cm⁻¹. Also, in the case of the fron 32, the gas concentration measurement maybe carried out by fitting other peaks of the infrared absorptions to the wave number of approximately 1080 cm⁻¹. Further, in the case of the fron 22, the gas concentration measurement may be carried out by fitting other peaks of the infrared absorptions to the wave number of approximately 815 cm⁻¹.

On the other hand, the bandpass filter 9h causes only such an infrared ray having a central wavelength of, for example, 3.4 µm (namely, wave number of 2940 cm⁻¹) to pass therethrough in correspondence with an infrared absorption spectrum of an impurity such as lubricating oil which might be mixed with the recovered fron gas "S." The bandpass filter 9i causes only such an infrared ray having a wavelength at which no infrared absorption caused by the recovered fron gas "S" occurs (for instance, wave number is on the order of 1020 to 1050 cm⁻¹) to pass therethrough as the reference output. It should also be noted that the reference-purpose bandpass filter may cause only an infrared ray having another wavelength (for example, wave number is on the order of 1800 to 2000 cm⁻¹) to pass therethrough.

As a result, an output of the pyroelectric type detector 4h for measuring the intensity of the infrared ray which has transmitted the bandpass filter 9h may be employed in a calculation capable of measuring a content amount of the impurity such as the lubricating oil mixed into the fron gas "S", whereas an output of the pyroelectric type detector 4i for measuring the intensity of the infrared ray which has passed through he bandpass filter 9i may be employed so as to correct outputs of the pyroelectric detectors 4a to 4h as the reference output.

The calculating process unit 6 executes a multivariate analysis by employing the outputs derived from the respective pyroelectric type detectors 4a to 4i so as to calculate concentrations of the respective measuring subject components, and then, outputs this measurement result to the above-explained display unit 7. In this multivariate analysis, such a way that an output of which pyroelectric type detectors 4a to 4i may be employed may be determined by manipulating the keyboard 8 by the user.

Reference numerals 8a to 8d indicate input keys used to select a calculation mode of the above-described multivariate analysis by an operator. That is, reference numeral 8a corresponds to a new refrigerant selection key which is depressed when the recovered fron gas "S" is a new refrigerant (for example, fron 143a, fron 125, fron 134a, and fron 32). Reference numeral 8b corresponds to an R502 selection key depressed when the receovered fron gas "S" is the fron 502 (namely, mixture made of fron 22 and fron 115). Reference numeral 8c corresponds to an on-vehicle type air conditioner selection key depressed when the recovered fron gas "S" is fron gas used for an on-vehicle air conditioner (generally speaking, either fron 12 or fron 134a). Also, reference numeral 8d corresponds to an all-sort selection key depressed when concentrations of all of single component fron gas to be measured (in this case, 7 sorts of single component fron gas, namely, fron 12, fron 134a, fron 143a, fron 125, fron 32, fron 22, and fron 115) are measured so as to confirm mixture components). Also reference numeral 8e shows a power-ON key, reference numeral 8f indicates a power-OFF key, and reference numeral 8g represents a measurement start key.

As a consequence, in the case that the concentration of the recovered fron gas "S" is measured by employing the fron gas concentration measuring apparatus 1 of the present invention, the power-ON key 8e is depressed and also the fron gas "S" is conducted into the measuring cell 2. Subsequently, the measurement start key 8g is depressed so as to start the fron gas concentration measurement. Then, since the calculating process unit 6 executes the multivariate analysis based upon the outputs of the respective pyroelectric type detectors 4a to 4i, this calculating process unit 6 calculates concentrations of the respective single component fron gas contained in the fron gas "S", and then, displays the measurement results on the display unit 7.

The outputs of the respective pyroelectric type detectors 4a to 4i are attenuated by the respective single components of fron gas contained in the recovered fron gas "S." As a result, the calculating process unit 6 processes the outputs of the pyroelectric type detectors 4a to 4i to obtain inverse numbers thereof, and converts these inverse numbers into logarithm numbers, so that an output value of a linear system is obtained which becomes such a detection amount line varied in a substantially linear manner with respect to the concentrations of the respective single component fron gas. Since the calculating process unit 6 executes the multivariate analysis by employing this output value, correct values can be obtained.

Also, in the case that while the above-described multivariate analysis is carried out, no clear confirmation is made that the recovered fron gas "S" to be measured is constituted by a mixture made of what single fron gas components, the operator depresses the all-sort selection key 8d, so that the calculating process unit 6 is operated in a mixture component confirmation mode, and thus, concentrations of 7 sorts of single component fron gas can be separately acquired by employing outputs derived from all of the pyroelectric type detectors 4a to 4i. In other words, the fron gas concentration measuring apparatus 1 of the present invention owns a mixture component confirmation function.

At this time, each of the characteristics of the transmission factors of the bandpass filters 9a to 9g is selected so as to be fitted to each of the infrared absorption spectra of the single component fron gas, and several spectra of these infrared absorption spectra are partially overlapped with infrared absorption spectra of other fron gas. As a result, the outputs of the respective pyroelectric type detectors 4a to 4i are adversely influenced by interference caused by other fron gas components. However, this adverse influence by the interference may be eliminated by executing the multivariate analysis. In other words, as to the filter characteristics of the bandpass filters 9a to 9g, half-value widths of these bandpass filters need not be unnecessarily made narrow. As a consequence, while the measuring precision of the fron gas concentration measuring apparatus 1 does not depend upon the performance of the bandpass filters 9a to 9g, the low-cost fron gas concentration measuring apparatus 1 can be provided.

While the above-explained fron gas concentration as to all gas sorts is measured, for instance, in such a case that only a concentration of any of the fron 32, the fron 125, the fron 134a, and the fron 143a becomes high, and also concentrations of other fron components are nearly equal to zero, the operator can recognize that the recovered fron gas "S" corresponds to the new type refrigerant. Alternatively, while this judgment may be automatically made by operating the calculating process unit 9, such an indication that the recovered fron gas "S" is the new type refrigerant may be displayed on the display unit 7, and then, the operator may be prompted to depress the new refrigerant selection key 8a in order to perform the concentration calculation in the high precision measuring mode.

Subsequently, the operator confirms such a fact that the recovered fron gas "S" corresponds to the new type refrigerant. Then, this operator newlydepresses the new refrigerant selection button 8a so as to execute the multivariate analysis under such a condition that extra gas components (namely, fron 12, fron 22, fron 115) which are not contained in the fron gas "S" as the measurement subject are set to zero. That is to say, this multivariate analysis corresponds to a calculation executed in ahighprecisionmeasurementmode. At this time, the calculating process unit 6 may perform only a calculation by directly employing the outputs derived from the respective pyroelectric type detectors 4a to 4i, which have been used in the above-explained concentration measurement for all gas sorts, so that measurement time may be shortened. Also, while the infrared rays are again irradiated from the thin-film light source 3, the calculating process unit 6 may restart the concentration measuring operation.

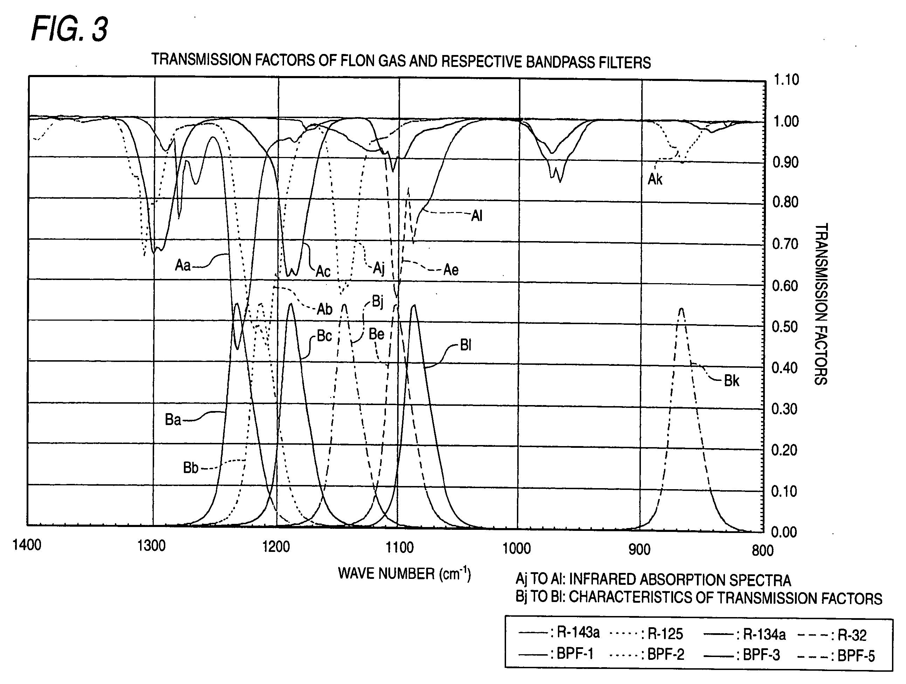

Fig. 3 is a graph for graphically representing only such infrared absorption spectra of fron gas (namely, fron 32, fron 125, fron 134a, fron 143a) which is employed as the new type refrigerant among the 7 sorts of single component fron gas shown in Fig. 2. As indicated in Fig. 3, since the sort of fron gas employed as the measurement subject is limited, an occurrence of errors caused by performing a calculation as to an unnecessary multivariate analysis can be eliminated, resulting in higher measuring precision.

Also, since the infrared absorption spectra of the gas components which are not contained in the recovered fron gas "S" is removed form the calculation, such a wave number in which an adverse influence caused by interference becomes substantially zero is produced. For instance, as indicated in Fig. 3, when the gas components which are not contained in the new type refrigerant are removed, such elements can be decreased which are overlapped with both infrared absorption spectra "Ac" and "Ae" of the fron 134a and the fron 32, and also, concentrations of the respective fron gas can be correctly acquired by way of both the bandpass filter 9c having such a transmission factor shown in a characteristic "Bc" and the bandpass filter 9e having such a transmission factor indicated in a characteristic "Be." In other words, the entire measuring precision of the fron gas concentration measuring apparatus 1 can be improved.

The calculation result of the multivariate analysis is displayed on the display unit 7. In the example shown in Fig. 1, the display unit 7 displays such a fact that both the concentrations of the fron 32 (R-32) and the fron 125 (R-125) are 50% respectively, and an impurity such as lubricating oil is mixed into the fron gas by 0.1%. Also, the display unit 7 displays such an indication that this mixture ratio corresponds to the fron gas (R-410A) used for room air conditioners, and the mixture ratio of this lubricating oil mixed with the fron gas (R-410A) by 0.1% is located with a recyclable range of the fron gas.

As a consequence, while the operator observes the above-explained values of the display unit 7, the operator can recycle the collected fron gas "S." On the other hand, in the case that a mixture ratio is located outside the regulated recyclable range, and/or a large number of fron gas is mistakenly mixed with each other, the operator is required to destroy this fron gas. Otherwise, in such a case that only a balance of a mixture ratio is deviated, a single component of fron gas which is short from the regulated single components of the fron gas may be merely added thereto, and thus, the resultant fron gas may be recycled.

In any of the above-described cases, since the fron gas concentration measuring apparatus 1 of the present invention is employed, the components of the collected fron gas "S" can be measured while the operator has a sense of a tester, and furthermore, the follow problems can be avoided. That is, the operator mistakenly recognizes the sort of fron gas "S", and since the improper fron gas is recycled, performance of cooling appliances is deteriorated and also the cooling appliances are brought into malfunction, which can be avoided by the present invention.

More specifically, when the operator can roughly grasp the components of the collected fron gas "S", since the fron gas concentration measuring apparatus 1 owns such a high precision measuring function that the sort of the single component fron gas contained in the fron gas is selected by the key input, and the concentration of this selected single component fron gas is measured in high precision, this fron gas concentration measuring apparatus 1 can carry out the gas concentration measuring operation in high precision, although this measuring apparatus 1 owns the simpler construction. When the high precision measurement function and the mixture component confirmation function are selectively switched, the following measurement method is carried out. That is, the concentrations of the respective single component fron gas (namely, measuring subject components) is measured by firstly employing the mixture component confirmation function, the operator makes a judgment based upon the measurement result and enters the necessary key input, so that errors can be reduced. Next, a description will now be made of various high-precision measurement modes executed in the fron gas concentration measuring apparatus 1 according to this embodiment.

Also, the above-described high precision measurement function may be alternatively carried out in such a manner that even when infrared absorptions are measured in a plurality of wave numbers with respect to single component fron gas, such wave numbers having no adverse influence caused by interference may be selected in response to a sort of single components of fron gas contained in the fron gas "S." In the case shown in Fig. 3, while both the following bandpass filters and the pyroelectric type detectors are provided with the detector 4, these bandpass filters and pyroelectric type detectors are employed so as to execute the multivariate analysis, so that the measurement precision may be furthermore improved. These bandpass filters own characteristics of such transmission factors as characteristics "Bj", "Bk", and "Bl", while wave numbers of approximately 1145 cm⁻¹, 870 cm⁻¹, and 1080 cm⁻¹ are used as centers, which are fitted to these infrared absorption spectra "Aj", "Ak", and "Al" of the fron 125 and the fron 32.

Similarly, in such a case that the fron gas "S" to be measured corresponds to such fron gas for recovering the fron 505, since single fron gas components other than both the fron 22 and the fron 115 are not contained, the operator may switch the calculation methods for the multivariate analysis executed by the calculating process unit 6 by depressing the R505 selection key 86 when this fron gas "S" is measured.

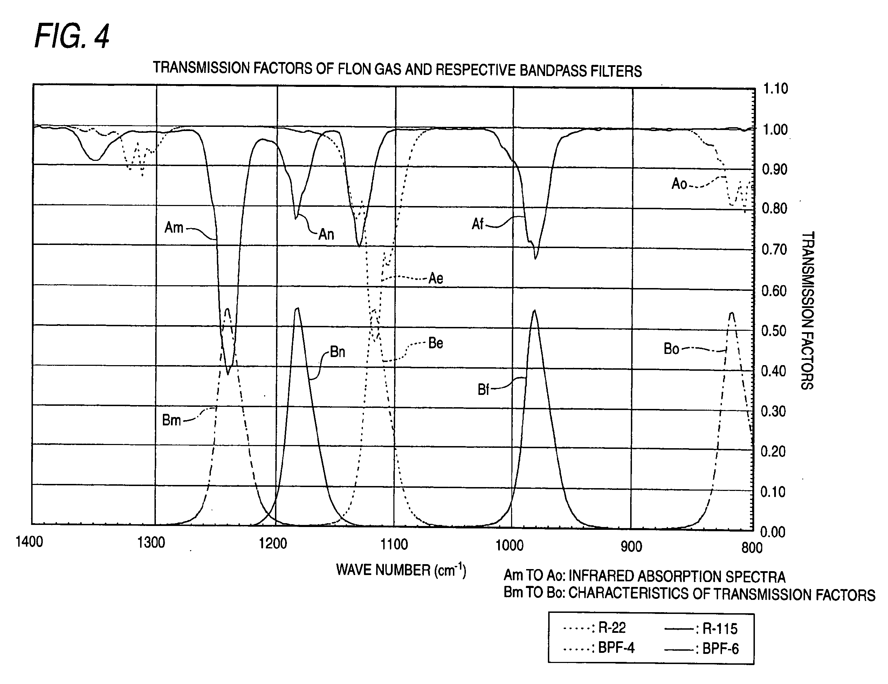

In other words, as indicated in Fig. 4, the calculating process operation is carried out, while the gas components contained in the fron gas "S" are limited only to both the fron 22 and the fron 115. As a consequence, interference components maybe largely eliminated. That is to say, the measuring precision may be extremely improved.

In addition, in this case, other infrared absorption spectra "Am", "An", and "Ao" of both the fron 115 and the fron 22 can be hardly and adversely influenced by interference caused by other gas components. As a result, while both the following bandpass filters and the pyroelectric type detectors are provided with the detector 4, these bandpass filters and pyroelectric type detectors are employed so as to execute the multivariate analysis, so that the measurement precision may be furthermore improved. These bandpass filters own characteristics of such transmission factors as characteristics "Bm", "Bn", and "Bo", while wave numbers of approximately 1240 cm⁻¹, 1180 cm⁻¹, and 815 cm⁻¹ are used as centers, which are fitted to these infrared absorption spectra "Am", "An", and "Ao" of the above-described fron 115 and fron 22.

When the fron 505 is measured in the high precision measurement mode, instead of such a bandpass filter having the transmission factor characteristic, e.g., "Bn", and the pyroelectric type detector thereof, the concentration of the fron 115 may be measured by executing such amultivariate analysis with employment of an output derived from the bandpass filter 9c and an output derived from the pyroelectric type detector 4c, while the characteristic "Bc" of this bandpass filter 9c is fitted to the infrared absorption spectrum "Ac" of the fron 134a.

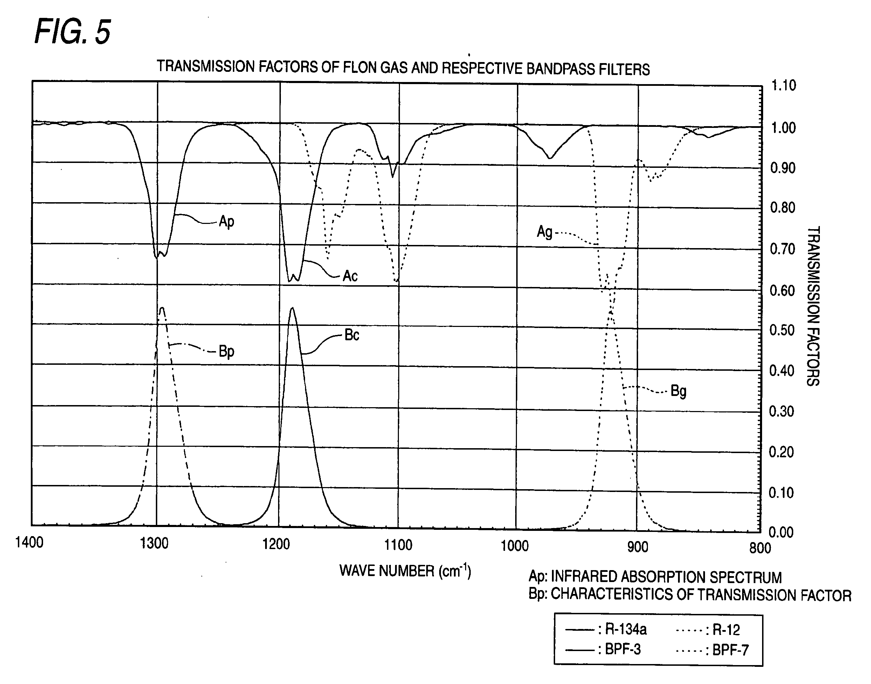

Fig. 5 is a diagram for explaining a multi-variable amount analysis executed in such a case that the fron gas "S" corresponds to such fron gas recovered from an on-vehicle air conditioner. That is to say, when the operator depresses the on-vehicle air conditioner selection key 8c so as to perform a fron gas concentration measuring operation, the fron gas concentration measuring apparatus 1 measures only the fron 12 and the fron 134a.

As indicated in Fig. 5, since gas components contained in the fron gas "S" are limited only to both the fron 12 and the fron 134a and the calculation process operation is carried out, for example, interference as to the infrared absorption spectrum "Ac" of the fron 134a, which is caused by the fron 12, can be considerably reduced, and further, interference as to the infrared absorption spectrum "Ag" of the fron 12, which is caused by the fron 134a, can be completely reduced. In other words, the measurement precision of the fron gas concentrations can be considerably improved.

In addition, the infrared absorption spectrum "Ap" of the fron 134a is not substantially completely influenced by the interference adverse influence caused by other components. As a consequence, while both a bandpass filter and a pyroelectric type detector are provided in the detector 4, this detector is employed so as to execute a multivariate analysis, so that the measurement precision can be further improved. This bandpass filter owns a characteristic of a transmission factor such as a characteristic "Bp", while a wave number of approximately 1295 cm⁻¹ is set as a center, which are fitted to this infrared absorption spectrum "Ap."

In the above-described examples, after all sorts of the single component fron gas which are contained in the recovered fron gas "S" have been measured, the operator may judge such gas components which are not contained in the recovered fron gas "S", and may judge as to whether or not these gas components correspond to the new type refrigerant. Alternatively, this judgment may be automatically carried out by the calculating process unit 6. In other words, first of all, the calculating process unit 6 may judge the sort of the mixed fron gas "S" based upon concentration ratios of the respective single component fron gas which are acquired when the concentration analysis is carried out in the mixture component confirmation mode. Subsequently, while the multivariate analysis is carried out in the high precision measurement mode from which the not-contained single component of fron gas has been eliminated, the calculating process unit 6 may measure concentration ratios thereof and may judge as to whether or not the analyzed fron gas can be recycled. Then, this judgment result maybe displayed on the display unit 7.

Conversely, also, in such a case that the operator recognizes such a fact that the recovered fron gas corresponds to either new type refrigerant fron gas or fron gas used for an on-vehicle air conditioner, and thus, commences the gas concentration measurement in the high precision measurement mode, when a concentration ratio of measurement results becomes abnormal, the operator may again execute the multivariate analysis in the mixture component confirmation mode, assuming that all sorts of single component fron gas are contained in this recovered fron gas, so as to output a correct measurement result.

As previously explained in detail, in accordance with the multi-component analyzing apparatus of the present invention, concentrations as to such a measuring subject sample which is constituted by mixing a plurality of measuring subject components can be measured in higher precision by employing the very simple construction with employment of the easily-handled infrared rays, while these plural measuring subject components own the infrared absorption spectra which may interfere to each other. In particular, since the multi-component analyzing apparatus owns both the mixture component confirmation function capable of confirming the mixture components contained in the measuring subject sample, and also the high precision measurement function capable of improving the measurement precision by subtracting such a component which is not contained in this measuring subject sample from the measurement calculation, the operator may readily selectively conduct the measurement precision and the simple operation, if required.

## Claims

1. A multi-component analyzing apparatus comprising:
a measuring cell for conducting thereinto a measuring subject sample gas which is made bymixing a plurality of measuring subject gas components with each other, whose sorts and number thereof are limited;
an infrared light source for irradiating infrared rays to the measuring cell;
a plurality of bandpass filters for transmitting therethrough infrared rays having wavelengths which are fitted to infrared absorption spectra of the respective measuring subject gas components among infrared rays which have transmitted the measuring cell;
a plurality of detectors for measuring intensity of infrared rays which have transmitted the bandpass filters;
a calculating process unit for measuring concentrations of the respective measuring subject gas components in such a manner that the calculating process unit executes a multivariate analysis by employing the intensity of the infrared rays measured by the respective detectors; and
a display unit for displaying thereon a measurement result.

2. A multi-component analyzing apparatus as claimed in claim 1 wherein said calculating process unit owns both a high precision measurement function and a mixture component confirmation function;
in said high precision measurement function, a measuring subject component contained in a measuring subject sample among the respective measuring subject components is selected, and a concentration of the selected measuring subject component is measured in high precision; and
in said mixture component confirmation function, assuming now that all of the measuring subject components are mixed into the measuring subject sample, concentrations of the respective measuring subject components are measured.

3. A multi-component analyzing apparatus as claimed in claim 1 wherein said measuring subject sample gas is a gas of a plurality of single component fron gases.
